# EUROPEAN PATENT APPLICATION

(11) **EP 1 811 784 A1**
(43) Date of publication of application: **25.07.2007**
(21) Application number: 05782389.0
(22) Date of filing: 12.09.2005
(51) Int. Cl.: H04N 7/26, H04N 5/92, H04N 5/91

(54) **MOVING PICTURE RE-ENCODING APPARATUS, MOVING PICTURE EDITING APPARATUS, PROGRAM, AND RECORDING MEDIUM**

(30) Priority: 13.10.2004 JP 2004298461
(71) Applicant: SHARP KABUSHIKI KAISHA, Osaka-shi, Osaka 545-8522 (JP)
(72) Inventor: YAMADA, Hideaki, Chiba 279-002 (JP); NAKABAYASHI, Jiro, 1680081 (JP); NAKAMURA, Yasuhiro, 2660031 (JP)
(74) Representative: Müller - Hoffmann & Partner
(86) International application number: PCT/JP2005/016737
(87) International publication number: WO 2006/040896

(57) **Abstract**

The present invention provides a moving picture re-encoding apparatus, which can generate correct reproducible encoded data by a light-load simple process when encoded moving picture data are converted or edited.
It is provided with: a decoding means 12 that decodes frames of a moving picture from an encoded bit stream; a frame selecting means 15 that selects a frame to be re-encoded from the decoded frames; an encoding means 14 that re-encodes only the selected frame; and an interval notifying means 13 that calculates a frame interval, after the re-encoding of a frame, between the frame and a next frame to be re-encoded to notify the decoding means of the calculated frame interval. The decoding means 12 decodes the bit stream for time based on the notified frame interval after the notification from the interval notifying means 13. The frame selecting means 15 selects the last frame as the next frame to be re-encoded among the frames until the time passes.

## Description

### TECHNICAL FIELD

The present invention relates generally to a moving picture re-encoding apparatus, a moving picture editing apparatus, a program, and a recording medium, and, more particularly, to a moving picture re-encoding apparatus, a moving picture editing apparatus, a program of the apparatuses, and a computer readable recording medium recording the program that are used for generating a different stream from an encoded moving picture stream.

### BACKGROUND OF THE INVENTION

Conventionally, when editing a moving picture encoded in an encoding mode such as the MPEG (Moving Picture Experts Group)-2 and 4, the editing has been performed for each GOP (Group Of Picture) or each frame (I-frame) of an intra-coded image. In such an editing mode, it is difficult to edit frames other than the I-frame, such as a frame (P-frame) of a predictive encoded image and a frame (B-frame) of a bidirectionally predictive encoded image, and addressable frames are limited.

Therefore, for editing from a frame other than the I-frame, video data must be decoded once and processed as an input image. In a proposed technology, at the time of segmenting from an arbitrary position, only the beginning of the segment is decoded and, data are copied for the rest without decoding.

To change an image size of video data due to scaling of a display frame, etc. , and to change a bit rate to a different rate, since the data cannot be processed in the encoded form, the data must be decoded once and restored to an image frame by a decoder and must be re-encoded by an encoder. Therefore, for example, if a user wants to reduce data or wants to segment a certain range of a moving picture encoded in the MPEG-2 and 4, etc., a stream different from the original stream is generated by such a re-encoding process.

However, since decoding and encoding must concurrently be processed for re-encoding, it is problematic that the load is high and that a synchronization process for certainly encoding the decoded data is difficult.

A re-encoding program for compression moving picture, re-encoding apparatus, and method have been proposed as a re-encoding technology for suppressing image quality deterioration and efficiently realizing bit rate conversion at high speed (see, e.g., Patent Document 1). In the re-encoding technology described in Patent Document 1, encoding is performed every time a decoder decodes one frame.
Patent Document 1: Japanese Laid-Open Patent Publication No. 2003-244705

### DISCLOSURE OF THE INVENTION

### PROBLEMS TO BE SOLVED BY THE INVENTION

However, when employing a technology described above such as, at the time of segmenting from an arbitrary position, decoding only the beginning frame of the segment and encoding it to an I-frame and copying original data for subsequent frames without re-encoding, since a mismatch occurs between the I-frame and the subsequent frames, the image quality is deteriorated and standard violation tends to be generated. Since the bit rate, etc., of the original video must be analyzed to prevent the mismatch from occurring, the processing load is increased.

When employing a technology of encoding one frame decoded by decoder such as Patent Document 1, a created video stream often fails to conform to the standard.

Although a moving picture re-encoding apparatus can be configured such that the decoder and the encoder are operated in real time without synchronization, the number of frames of the contents is extremely reduced in the case of a CPU (Central Processing Unit) with low power. If the decoder and the encoder are asynchronously operated at the same time when the re-encoding is performed, the results may be varied depending on processing abilities of devices even when the same moving picture file is re-encoded.

When the encoded moving picture data (video data) are resized, converted in the bit rate conversion, etc., and edited, especially from frames other than the I-frame, the process becomes complicated and increases the load, and the result may not conform to the standard in some cases.

The present invention was conceived in view of the above situations and it is therefore the object of the present invention to provide a moving picture re-encoding apparatus, a moving picture editing apparatus including the apparatus, a moving picture re-encoding program, a moving picture editing program, and a computer readable recording medium recording the program, which can generate correct reproducible encoded data by a light-load simple process when encoded moving picture data are converted or edited.

### MEANS FOR SOLVING THE PROBLEMS

To solve the above problems, the present invention has the configuration of any one of the following technical means.
A first technical means is a moving picture re-encoding apparatus comprising: a decoding means that decodes frames of a moving picture from a bit stream acquired by encoding the moving picture; a frame selecting means that selects a frame to be re-encoded from the frames decoded by the decoding means; an encoding means that re-encodes only the frame selected by the frame selecting means; and an interval notifying means that calculates a frame interval, after the re-encoding of a frame by the encoding means, between the frame and a next frame to be re-encoded to notify the decoding means of the calculated frame interval, the decoding means decoding the bit stream for time based on the notified frame interval after the notification from the interval notifying means, the frame selecting means selecting a last frame as the next frame to be re-encoded among the frames until the time passes.

A second technical means is the moving picture re-encoding apparatus of the first technical means, wherein the interval notifying means includes a means that calculates the frame interval based on rate control information when the encoding means re-encodes a frame.

A third technical means is the moving picture re-encoding apparatus of the second technical means, wherein the rate control information is any one piece or a plurality of pieces of information among an image size of a frame re-encoded by the encoding means, a code amount of the frame at the time of the encoding, an encoding bit rate in the encoding means, and an occupation amount of a virtual buffer assumed to be a video memory for decoding when the re-encoding is completed in the encoding means.

A fourth technical means is the moving picture re-encoding apparatus of any one of the first to third technical means, further comprising an operation input means that accepts specification of a bit stream to be re-encoded and operation including a moving picture re-encoding instruction, wherein the encoding means performs the encoding with an encoding bit rate based on the operation input through the operation input means.

A fifth technical means is the moving picture re-encoding apparatus of the fourth technical means, further comprising a minimum value calculating means that preliminarily predicts a minimum value of the frame interval based on information related to the operation input through the operation input means, wherein the decoding means continues the decoding up to time indicated by the minimum value of the frame interval calculated by the minimum value calculating means before the notification of the frame interval from the interval notifying means.

A sixth technical means is the moving picture re-encoding apparatus of any one of the first to fifth technical means, wherein the encoding means includes a means that performs intra-frame encoding and a means that performs inter-frame encoding for a frame to be re-encoded.

A seventh technical means is a moving picture editing apparatus including the moving picture re-encoding apparatus of any one of the first to sixth technical means, comprising: an edit accepting means that accepts an instruction for editing the bit stream from a user; and an editing means that edits a moving picture based on the instruction accepted by the edit accepting means, wherein the moving picture re-encoding apparatus re-encodes the edited moving picture in conjunction with the edit of the moving picture by the editing means.

An eighth technical means is a program incorporated into a moving picture re-encoding apparatus comprising a decoding means that decodes frames of a moving picture from a bit stream acquired by encoding the moving picture and an encoding means that re-encodes the frame decoded by the decoding means, the program allowing a controlling portion of the moving picture re-encoding apparatus to perform steps including: a frame selecting step of selecting a frame to be re-encoded from the frames decoded by the decoding means; an encode instructing step of allowing the encoding means to encode only the frame selected in the frame selecting step; an interval notifying step of calculating a frame interval, after the re-encoding of a frame by the encoding means, between the frame and a next frame to be re-encoded to notify the decoding means of the calculated frame interval; and a decode instructing step of instructing the decoding means to decode the bit stream for time based on the notified frame interval after the notification from the interval notifying step, wherein the flame selecting step includes a step of selecting a last frame as the next to be re-encoded among the frames until the time passes.

A ninth technical means is the program of the eighth technical means, wherein the interval notifying step includes a step of calculating the frame interval based on rate control information when the encoding means re-encodes a frame.

A tenth technical means is the program of the ninth technical means, wherein the rate control information is any one piece or a plurality of pieces of information among an image size of a frame re-encoded by the encoding means, a code amount of the frame at the time of the re-encoding, an encoding bit rate in the encoding means, and an occupation amount of a virtual buffer assumed to be a video memory for decoding when the re-encoding is completed in the encoding means.

An eleventh technical means is the program of any one of the eighth to tenth technical means, wherein the program allows the controlling portion to further perform an operation input step of accepting specification of a bit stream to be re-encoded and operation including a moving picture re-encoding instruction, and wherein the encode instructing step instructs the encoding means to perform the encoding with an encoding bit rate based on the operation input in the operation input step.

A twelfth technical means is the program of the eleventh technical means, wherein the program allows the controlling portion to further perform a minimum value calculating step of preliminarily predicting a minimum value of the frame interval based on information related to the operation input in the operation input step, and wherein the decode instructing step instructs the decoding means to continue the decoding up to time indicated by the minimum value of the frame interval calculated in the minimum value calculating step before the notification of the frame interval in the interval notifying step.

A thirteenth technical means is the program of any one of the eighth to twelfth technical means, wherein the encoding means includes a means that performs intra-frame encoding and a means that performs inter-frame encoding for a frame to be re-encoded.

A fourteenth technical means is the program of any one of the eighth to thirteenth technical means, wherein the program allows the controlling portion to further perform an edit accepting step of accepting an instruction for editing the bit stream from a user and an editing step of editing a moving picture based on the instruction accepted in the edit accepting step and allows the controlling portion to control the decoding means and the encoding means to re-encode the edited moving picture in conjunction with the edit of the moving picture in the editing step.

A fifteenth technical means is a program for allowing a computer to function as the apparatus of any one of the first to seventh technical means.

A sixteenth technical means is a computer readable recording medium having recorded thereon the program of any one of the eighth to fifteenth technical means.

### EFFECT OF THE INVENTION

According to the present invention, correct reproducible encoded data can be generated by a light-load simple process when encoded moving picture data are converted or edited.

### BRIEF DESCRIPTION OF THE DRAWINGS

[Fig. 1] Fig. 1 is a diagram of one configuration example of a moving picture re-encoding apparatus according to one embodiment of the present invention.
[Fig. 2] Fig. 2 is a diagram of one configuration example of a computer applicable to the moving picture re-encoding apparatus according to the present invention.
[Fig. 3] Fig. 3 is a flow diagram for explaining an example of a re-encoding process in the moving picture re-encoding apparatus of Fig. 1 and also is a flow diagram for explaining an example of a process procedure of a moving picture re-encoding program according to one embodiment of the present invention.
[Fig. 4] Fig. 4 is one configuration example of a moving picture editing apparatus including the moving picture re-encoding apparatus according to the present invention.
[Fig. 5] Fig. 5 is a diagram for explaining a re-encoding process in the moving picture editing apparatus of Fig. 4.
[Fig. 6] Fig. 6 is a diagram for explaining a frame interval determining process in the re-encoding process of Fig. 5.
[Fig. 7] Fig. 7 is a diagram for explaining the control in the frame interval determining process of Fig. 6 along with an occupation amount of a VBV buffer.

### EXPLANATION OF REFERENCE NUMERALS

1... moving picture re-encoding apparatus; 2... computer; 4... moving picture editing apparatus; 11... operation input means; 12... decoding means; 13... interval notifying means; 14... encoding means; 15... frame selecting means; 21... CPU; 22... RAM; 23... ROM; 24... input device; 25... displaying device; 26... output device; 40... displaying portion; 41... image frame storage portion; 42... encoding/decoding operation controlling portion; 43... decoding portion; 44... encoding portion; 45... multiplexing/demultiplexing portion; 46... input portion; 47... output portion; 48... storage portion A; and 49... storage portion B.

### PREFERRED EMBODIMENTS OF THE INVENTION

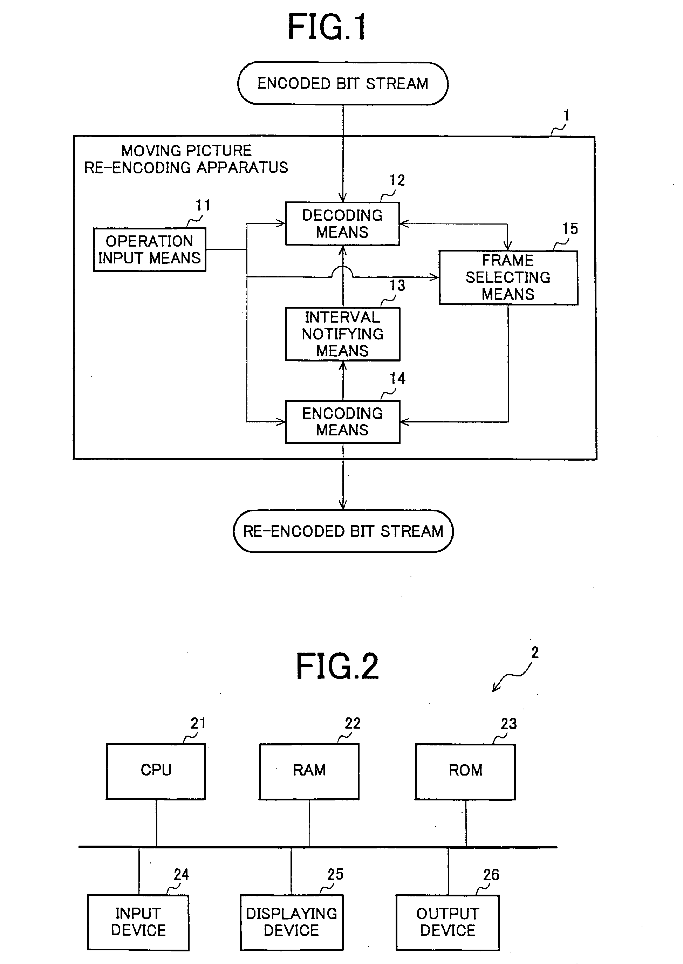

Fig. 1 is a diagram of one configuration example of a moving picture re-encoding apparatus according to one embodiment of the present invention; 1 is a moving picture re-encoding apparatus; 11 is an operation input means; 12 is a decoding means; 13 is an interval notifying means; 14 is an encoding means; and 15 is a frame selecting means in Fig. 1.

The moving picture re-encoding apparatus according to the embodiment includes the decoding means 12, the interval notifying means 13, the encoding means 14, and the frame selecting means 15, and a moving picture re-encoding apparatus 1 illustrated in Fig. 1 includes the operation input means 11 in addition to the above constituent elements.

The operation input means 11 is a means that accepts specification of a bit stream to be re-encoded and operation including a moving picture re-encoding instruction to pass the accepted information to the subsequent stage. The moving picture re-encoding instruction generally includes specification of target moving picture data and instructions for editing such as section editing or insertion and superimposing of additional data, bit rate conversion, size conversion, etc., of the moving picture data. For example, applicable instructions include "record moving picture data of a file A (bit rate 500bps) as 384bps moving picture data" or "record data from 10 minutes to 30 minutes after the start of moving picture data of a file A with a 1/3 data amount". Although the operation input means 11 includes an edit accepting means that accepts from a user an instruction for editing an encoded bit stream in this description, this is not a requirement.

Although the information related to the operation is transferred to the decoding means 12, the encoding means 14, and the frame selecting means 15 in this description, this may not be performed depending on forms of the means and, for example, the information may also be transferred to the interval notifying means 13 or, instead of transferring to the frame selecting means 15, the decoding means 12 may notify the frame selecting means 15 of a frame for which decoding is started. The types of the operation may vary and the present invention can accommodate operation such as concurrently performing the editing and various conversions. Although any methods of operation may be used as long as a user can perform operation related to the re-encoding instruction, it is preferable to incorporate a GUI (Graphical User Interface) that can easily be operated by the user. If the moving picture re-encoding apparatus 1 includes an editing means that performs various types of editing of the moving picture data through the above GUI depending on the type of the operation, editing such as section editing or insertion and superimposing of additional data can be performed. In practice, the editing means edits a moving picture based on the instruction accepted by the edit accepting means and the moving picture re-encoding apparatus 1 may re-encode the edited moving picture in conjunction with the editing of the moving picture in the editing means. In the present invention, the timings of the editing and the re-encoding are not particularly limited.

The decoding means 12 decodes frames of the moving picture from a bit stream (also referred to as an encoded video stream) acquired by encoding the moving picture. The decoding of the specified bit stream is started/ended based on the re-encode start/end instruction or the decode start/end instruction input from the operation input means 11 by a user, and the decoded frames are generated in such a period. Alternatively, the start and end of the re-encode may be controlled with the input control by the above bit stream input means.

However, as described later, the decoding means 12 decodes a video frame corresponding to the start instruction regardless of whether the frame is the I-frame on the encoded video stream and, basically, the decoding means 12 does not perform the decoding after the first video frame is decoded until a notification of a frame interval is received from the interval notifying means 13. Actually, the bit stream input means is also disposed on the moving picture re-encoding apparatus 1 to input the target moving picture data (moving picture bit stream) through a recording medium or network.

The frame selecting means 15 selects a frame to be re-encoded from the frames decoded by the decoding means 12. Among frames in the time based on the notified frame interval described later, the frame selecting means 15 selects the last frame as the next re-encoded frame. The frame selecting means 15 unconditionally selects the frame decoded first by the decoding means 12 (the frame based on the start instruction).

The encoding means 14 re-encodes only the frame selected by the frame selecting means 15. The encoding means 14 may perform the encoding with an encoding bit rate (or an encoding rate) based on the contents of the operation input from the operation input means 11. At the time of the encoding, the encoding means 14 is controlled such that neither overflow nor underflow occurs in a virtual buffer assumed to be a video memory of a decoder so as to enable decoding with any decoders after the encoding. The virtual buffer is for the purpose of monitoring to prevent a stream exceeding a capacity of a transport stream (TS) buffer on the receiving side (decoding side) in the MPEG mode and is called a VBV (Video Buffering Verifier) buffer, and a buffer upper limit is standardized.

The encoding means 14 may terminate the encoding based on the re-encoding end instruction (including a reserved end instruction) input with the operation input means 11 or the decoding means 12 may receive such an end instruction and stop the decoding to automatically terminate the encoding of the encoding means 14. The encoding means 14 preferably includes a means for intra-frame encoding of the frame to be re-encoded and a means for inter-frame encoding of the frame to be re-encoded.

After the encoding means 14 re-encodes a frame, the interval notifying means 13 calculates a frame interval (frame interval) between that frame and a next re-encoding target frame and notifies the decoding means 12 of the calculated frame interval. The frame interval of this notification is preferably calculated based on the rate control information when the encoding means 14 re-encodes the frame. The rate control information will be described later and particularly includes information for controlling the above virtual buffer such that no overflow occurs. Actually, a bit stream output means is also disposed on the moving picture re-encoding apparatus 1 to output the moving picture data re-encoded by the encoding means 14 through a recording medium or network to another apparatus. When the bit stream output means (preferably including the recording medium that is an output destination) is disposed along with the above operation input means 11, the editing means, and the bit stream input means, the form of the moving picture re-encoding apparatus 1 can be considered as a moving picture editing apparatus since the apparatus can read, edit, and record the moving pictures.

The frame interval (FrameInterval) will complementarily be described here. Generally, a standard of image encoding includes prescription for suppressing a processing amount per unit time within a range. For example, in the MPEG-4 standard, a virtual buffer is prescribed for each level of the MPEG-4 and it is prescribed that the data are received and encoded within that range (MPEG-4 visual Annex D). Therefore, in a codec encoding an image, the encoding must be performed within the buffer range prescribed in the standard. The interval (FrameInterval) of the frames to be encoded is used for control in this situation. Although the frame interval is described in this description, a parameter used for controlling the encoder includes a QP value (quantization parameter), etc., other than the frame interval.

After the notification by the interval notifying means 13, the decoding means 12 decodes the encoded video stream for the time based on the frame interval of the notification. Decoding for the time based on the notified frame interval means that the decoding is performed for the time obtained by adding the frame interval to the notification time in the case of the clock in the apparatus 1 and, in other words, if time information such as DTS (Decoding Time Stamp) of the MPEG mode is added as a piece of header information to the encoded video stream, it can also be said that the decoding is performed until the frame at the time obtained by adding the frame interval to the time indicated by the frame decoded first by the decoding means 12. The decoding means 12 decodes a video frame corresponding to the start instruction regardless of whether the frame is the I-frame on the encoded video stream (of course, e.g., in the case of the P-frame, the I-frame necessary for the decoding is also decoded in advance) and, basically, the decoding means 12 does not perform the decoding after the first video frame is decoded until the notification of the frame interval is received from the interval notifying means 13.

However, a minimum value of the frame interval may preliminarily predicted based on information related to the operation input with the operation input means 11 (such as a type of operation and a bit rate of the encoded video stream) and the decoding may preliminarily be performed to the predicted minimum value of the frame interval. This prediction can be realized by further including a minimum value calculating means that calculates the prediction of the minimum value of the frame interval in the moving picture re-encoding apparatus 1. Before the frame interval notification from the interval notifying means 13, the decoding means 12 may continue the decoding up to the time indicated by the minimum value of the frame interval calculated by the minimum value calculating means. Since the time indicated by the minimum value cannot exceed the time indicated by the actual frame interval of the notification from the interval notifying means 13 in such a form, a time loss such as stopping the decoding process of the decoding means 12 is eliminated until the time indicated by the minimum value.

The rate control information will be described. The rate control information is any one piece or a plurality of pieces of information among an image size of the frame re-encoded by the encoding means 14, a code amount of the frame at the time of the re-encoding, a bit rate in the moving picture re-encoding apparatus 1 (i.e., a re-encoding bit rate), and an occupation amount of the virtual buffer assumed to be a video memory for decoding at the current time (when the re-encoding is completed), and preferably is all those pieces of information. The first three pieces of the information originally are the setting information based on the user instruction at the operation input means 11 and the original encoded bit stream and, therefore, the minimum value may be calculated from those pieces of the setting information and a prediction value of the buffer amount at the time of the completion of the encoding in the form including the above minimum value calculating means.

In each of the above embodiments according to the present invention, a file optimum for a request from the encoder can be created regardless of processing abilities of devices by operating the decoding means 12 (e.g., decoder) in accordance with a request from the encoding means 14 (e.g., encoder) as above, and a reproducible re-encoding process can be achieved. Since the encoder and the decoder can be controlled by using conventionally existing information instead of special information without complicated calculations, the introduction of the mode according to the present invention does not increase the processing load. While the moving picture is edited and re-encoded by a light-load process according to the present invention, the created codes conform to the standard even though the process is simple. The re-encoding process is a process performed in various devices such as various recorders for DVD (digital versatile disc), HDD (hard disk drive), etc., the present invention preferably functions when incorporated into such recorders.

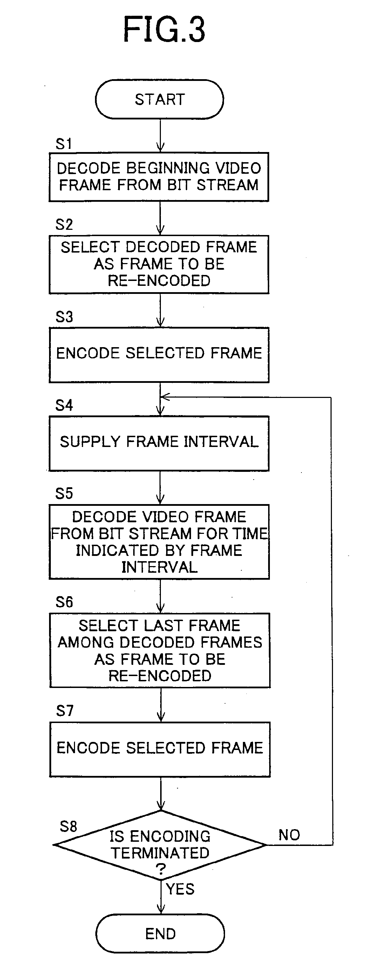

Fig. 2 is a diagram of one configuration example of a computer applicable to the moving picture re-encoding apparatus according to the present invention, and Fig. 3 is a flow diagram for explaining an example of a re-encoding process in the moving picture re-encoding apparatus of Fig. 1 and also is a flow diagram for explaining an example of a process procedure of a moving picture re-encoding program according to one embodiment of the present invention. In Fig. 2, 2 is a computer; 21 is a CPU (Central Processing Unit) ; 22 is a RAM (Random Access Memory) ; 23 is a ROM (Read Only Memory) ; 24 is an input device; 25 is a displaying device; and 26 is an output device.

The process procedure of the moving picture re-encoding apparatus 1 will be described with an example of incorporating the moving picture re-encoding program according to one embodiment of the present invention into the ROM 23 in the computer 2 of Fig. 2 with reference to Fig. 3. The computer 2 of Fig. 2 represents not only a main portion including a controlling portion of various devices such as a recorder incorporating the function of the re-encoding process according to the present invention, but also a general-purpose personal computer (PC).

In the computer 2, main constituent elements are the input device 24 such as a keyboard and mouse for entering various types of information, a recording medium reading device, and a network device for input from other devices; the displaying device 25 that is a display such as LCD, PDP, organic EL, and CRT displaying moving picture data and various setting screen for editing; the output device 26 for external output, such as a recording medium recording device, a network connecting device (communication device such as a network board for connecting to and communicating through a network), and a printing device; the rewritable ROM 23 (a part of which may be not rewritable) that records the moving picture re-encoding program (or moving picture editing program) according to the present invention, along with a base program; the CPU 21 for executing the program stored in the ROM 23; and the RAM 22 that is the execution area thereof, and the elements are connected through a bus in the illustration.

The moving picture re-encoding program (or moving picture editing program) is a program that controls the CPU 21, etc., such that the computer 2 functions as a portion of each means (or as each means) described above. The program may include GUI for the displaying device 25 to facilitate use by an apparatus user (operator performing the re-encoding). The information handled by these devices is temporarily accumulated in the RAM 22, then stored in various types of the ROM 23, and read out, modified, and written by the CPU 21 as needed.

When the input device 24 inputs the target encoded bit stream and the edit instruction, the decoding program corresponding to the decoding means decodes a beginning video frame to be edited from the bit stream based on the edit instruction (step S1). A frame selecting program corresponding to the frame selecting means selects the decoded frame as a frame to be re-encoded, based on the start instruction (step S2); an encoding program corresponding to the encoding means accumulates the selected frame in the virtual buffer (e.g., VBV buffer) at a predetermined rate; and when one frame is accumulated, the frame is discharged from the VBV buffer to perform the encoding (step S3). At step S2, a process may be performed such that the frame decoded by the decoding program based on the user instruction is delivered to the encoding program.

An interval notifying program corresponding to the interval notifying means calculates a frame interval from the rate control information used for the encoding and notifies the decoding program of the frame interval (step S4). Based on this notification, the decoding program decodes the video stream from the bit stream until the time indicated by the frame interval (step S5). The frame selecting program selects the last frame of the decoded frames as a frame to be re-encoded (step S6), and the encoding program encodes the selected frame (step S7). It is determined based on the contents of the user instruction whether the re-encoding is terminated (step S8), and if the re-encoding is not terminated, the procedure goes back to step S4 to continue the process.

As described above, the program according to the present invention can create reproducible data independently of a difference of CPU and a CPU occupation rate indicating whether other threads are activated. Since the algorithm is simple, a high-speed process can be performed, particularly even when implemented entirely by software except the decoding means and the encoding means. In spite of the light process, the process is performed such that no overflow occurs in the virtual buffer, and therefore a bit stream conforming to the standard can be generated.

Although Figs. 2 and 3 show an example of implementing all the processes with the program, off course only the decoding process and the encoding process (processes corresponding to the decoding means 12 and the encoding means 14) are preferably configured by hardware because of large loads in the case of the software process, and may be configured by a decoder and encoder, or the codec, for example. Especially, considering process speeds of current PCs, decoders and encoders, it is preferable to configure the decoding means and the encoding means as hardware (i.e., decoder and encoder, or the codec) and to configure other means as a program for controlling the hardware. In this case, the moving picture re-encoding program is a program driving the decoder and encoder or the codec and performing the following process described with reference to Fig. 3.

That is, the decoder (a decode portion of the codec, the same applies hereinbelow) is allowed to decode a beginning video frame from the bit stream (step S1). The frame selecting program selects the decoded frame as a frame to be re-encoded, based on the start instruction (step S2), and delivers the frame to the encoder (an encode portion of the codec, the same applies hereinbelow). The encoder accumulates the selected frame in the virtual buffer (e.g., VBV buffer) at a predetermined rate, and when one frame is accumulated, the frame is discharged from the VBV buffer to perform the encoding (step S3). At step S2, a process may be performed such that the frame decoded by the decoder based on the user instruction is delivered to the encoder.

An interval notifying program calculates a frame interval from the rate control information used for the encoding and notifies the decoder of the frame interval (step S4). Along with the notification, the decoder is instructed to decode the video stream from the bit stream until the time indicated by the frame interval. Based on this notification, the decoder decodes the video stream from the bit stream until the time indicated by the frame interval (step S5). The frame selecting program selects the last frame of the decoded frames as a frame to be re-encoded (step S6) and delivers the frame to the encoder. The encoder encodes the selected frame (step S7). It is determined based on the contents of the user instruction whether the re-encoding is terminated (step S8), and if the re-encoding is not terminated, the procedure goes back to step S4 to continue the process.

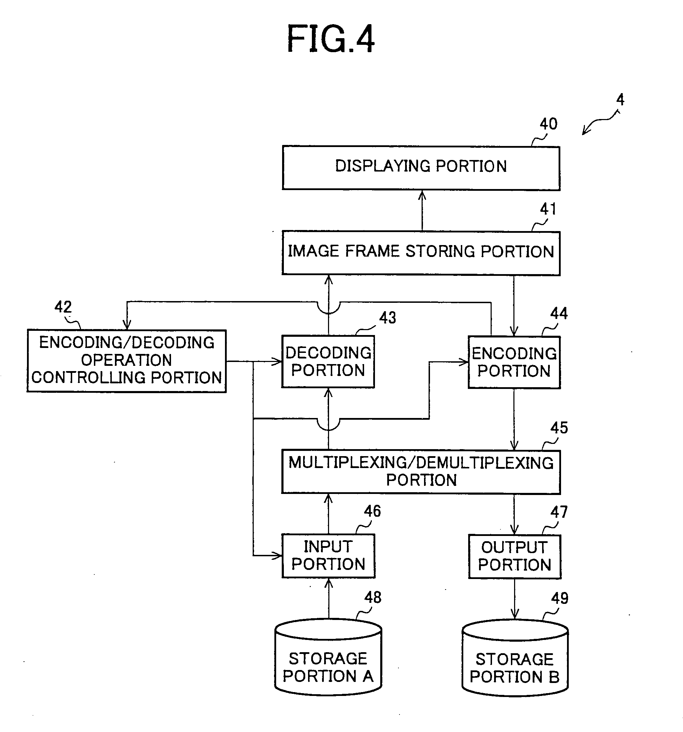

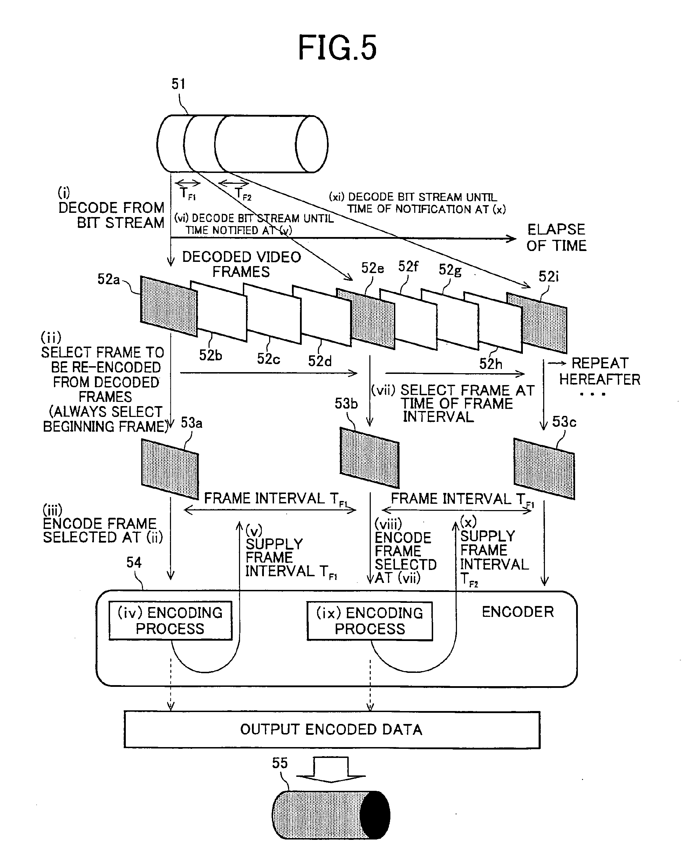

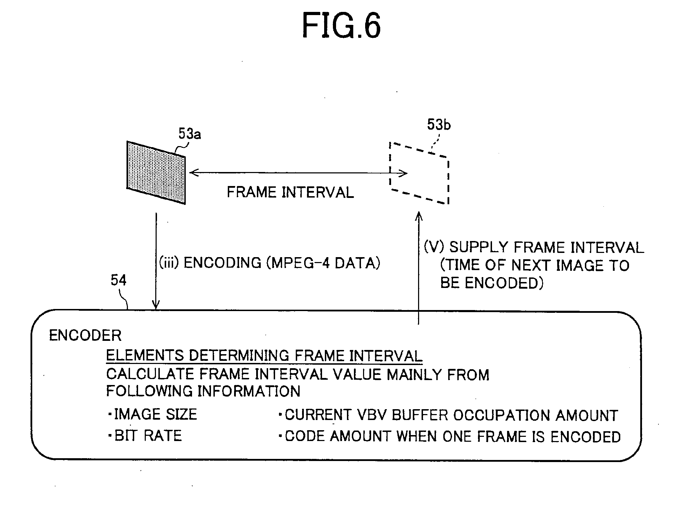

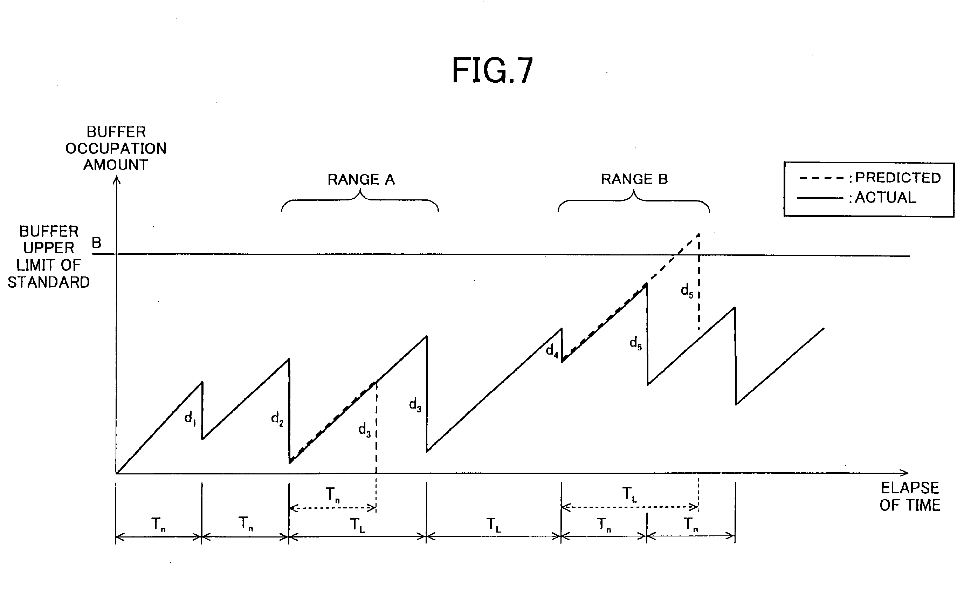

One configuration example of the moving picture re-encoding apparatus according to the present invention will more specifically described with reference to Figs. 4 to 7. Fig. 4 is one configuration example of a moving picture editing apparatus including the moving picture re-encoding apparatus according to the present invention, and 4 is a moving picture editing apparatus in Fig. 4. Fig. 5 is a diagram for explaining a re-encoding process in the moving picture editing apparatus of Fig. 4; Fig. 6 is a diagram for explaining a frame interval determining process in the re-encoding process of Fig. 5; and Fig. 7 is a diagram for explaining the control in the frame interval determining process of Fig. 6 along with an occupation amount of the VBV buffer.

The illustrated moving picture editing apparatus 4 is configured by a displaying portion 40, an image frame storage portion 41, an encoding/decoding operation controlling portion 42, a decoding portion 43 corresponding to the decoding means, an encoding portion 44 corresponding to the encoding means, a multiplexing/demultiplexing portion 45, an input portion 46, an output portion 47, a storage portion A (48), and a storage portion B (49).

The decoding portion 43 corresponds to the decoding means and the encoding portion 44 corresponds to the encoding means. The multiplexing/demultiplexing portion 45 performs a process of multiplexing video (moving picture) data and audio data and a process of demultiplexing the multiplexed data; the output portion 47 and the latter process portion configures the above bit stream output means; and the input portion 46 and the former process portion configures the above bit stream input means. The displaying portion 40 has a display, etc., for displaying the image data decoded by the decoding portion 43 to a user, and the image frame storage portion 41 configured by a frame memory, etc., temporarily stores images to be displayed on the displaying portion 40 and also temporarily stores image data to deliver the data from the decoding portion 43 to the encoding portion 44.

The decoding portion 43 and the encoding portion 44 are controlled by the encoding/decoding operation controlling portion 42. It can be said that the controlling portion 42 mainly configures the above frame selecting means and interval notifying means (and minimum value calculating means). The encoding/decoding operation controlling portion 42 can realize the input control of the encoded bit stream stored in the storage portion A (48) not only by controlling the decoding instruction at the decoding portion 43 but also by controlling the input portion 46. The storage portion B (49) is a portion that stores the re-encoded bit stream, and a recording medium and a driving device thereof can be configured by the same recording medium and driving device as the storage portion A (48) without any problem. Although the operation input means, the edit accepting means, and the editing means are omitted, these means can be realized by inputting the user input to the encoding/decoding operation controlling portion 42 while displaying the target moving picture data and editing or converting items on the displaying portion 40.

With the above configuration, the moving picture editing apparatus 4 controls and allows the encoding/decoding operation controlling portion 42 to perform the following sequential processes from (i) to (xi). At (i), a beginning frame (if edited, the beginning frame of in that case) 52a is decoded in a bit stream 51 encoded with the MPEG-4, etc. The editing may be performed for the decoded frame while the decoding is performed. At (ii), a frame to be re-encoded is selected from the decoded frames. The beginning frame 52a is always selected. At (iii), the frame 53a (52a) selected at (ii) is encoded. An encoder 54 performs the encoding process (iv). At (v), a frame interval T_{F1} is calculated and notified (supplied) to the decoding portion 43. At (vi), the decoder decodes video frames (frames 52b, 52c, 52d, and 52e) until the interval T_{F1} is over. At (Vii), a frame 52e at the time of the frame interval is selected, and at (viii), the selected frame 53b (52e) is encoded. Although the encoder 54 performs the encoding process (ix), inter-frame encoding may be performed in consideration of the preliminarily encoded data. At (x), a frame interval T_{F2} is calculated and supplied to the decoding portion 43 as is the case with (v). At (xi), the decoder decodes video frames (frames 52f, 52g, 52h, and 52i) until the interval T_{F2} is over. The last frame 53c (52i) is selected and encoded. Such a process is continued until the re-encoding is no longer needed.

The calculation (estimation) of the frame interval (frame interval) will be described. As shown in Fig. 6, a requesting frame interval to the next encoded frame is returned based on a condition when the encoder 54 encodes the encoded data of the frame 53a to be re-encoded, i.e., the rate control information of the encoder 54 at the time of the encoding. The decoder decodes the original video bit stream for the frames within the time calculated based on the requesting frame interval. The encoder 54 encodes a frame decoded at the time obtained by adding the requesting frame interval.

The elements for estimating the frame interval (rate control information) mainly include an image size, a bit rate, a current occupation amount of the VBV buffer, and a code amount at the time of encoding one frame. Fig. 7 shows an example of the occupation amount of the VBV buffer; in Fig. 7, a vertical axis indicates an occupation amount of the buffer; a horizontal axis indicates elapse of the time, a dot line indicates a predicted value; and a solid line indicates an actual value. In Fig. 7, B is a buffer upper limit of the standard; d represents a code amount of one frame; T represents a frame interval value; Tₙ and T_{L} represent target frame interval values; and the slope of the graph represents a bit rate. To encode frames as much as possible, an upper limit may be set lower relative to the buffer upper limit B and, in this case, smaller data are assigned per frame. Conversely, to finely perform the encoding, an upper limit may be set as high as possible relative to the buffer upper limit B (i.e., an upper limit may be set to B) and, in this case, larger data are assigned per frame. With reference to Fig. 7, an example of specific control will be described.

In a range A, an amount of data acquired by the encoder is increased concurrently with the start of recording. When the frame interval has elapsed, first data are encoded (d₁). The data are continuously acquired and second data are encoded at the target frame interval Tₙ (d₂). When the second encoding is performed, it is expected that underflow occurs in the VBV buffer if encoding (d₃) is performed at the interval of Tₙ. Therefore, the frame interval is increased and changed to T_{L} for the next encoding to prevent the underflow of the VBV buffer.

In a range B, the recording is continued with the frame interval of T_{L} due to the control in the range A. When the encoding is performed at d₄, it is expected that overflow occurs in the VBV buffer if the next frame is encoded with the current frame interval T_{L}. Therefore, the next interval is shortened (brought closer to the target frame rate) to prevent the overflow of the VBV buffer.

In the specific control, the frame interval may be increased when a data amount of one frame is large and underflow is likely to occur in the VBV buffer because a video including many motions is encoded (range A), and the frame interval may be reduced when a code amount of one frame becomes smaller and overflow is likely to occur in the VBV buffer because the video becomes steady. The control may be performed such that data are stored in the VBV buffer by repeating the above steps. The interval of the frames re-encoded according to the present invention is of course not necessarily constant because the re-encoding is performed in conformity with the standard and, therefore, the frame interval supplied to the decoder is not constant.

As described above, in the arrangement of the re-encoding according to the present invention, the encoder and the decoder do not operate in real time. The decoding is performed for all the frames within the corresponding time and the encoder sets the parameter independently of the original video stream.

## Claims

1. A moving picture re-encoding apparatus comprising: a decoding means that decodes frames of a moving picture from a bit stream acquired by encoding the moving picture; a frame selecting means that selects a frame to be re-encoded from the frames decoded by the decoding means; an encoding means that re-encodes only the frame selected by the frame selecting means; and an interval notifying means that calculates a frame interval, after the re-encoding of a frame by the encoding means, between the frame and a next frame to be re-encoded to notify the decoding means of the calculated frame interval,
the decoding means decoding the bit stream for time based on the notified frame interval after the notification from the interval notifying means,
the frame selecting means selecting a last frame as the next frame to be re-encoded among the frames until the time passes.

2. The moving picture re-encoding apparatus of claim 1, wherein the interval notifying means includes a means that calculates the frame interval based on rate control information when the encoding means re-encodes a frame.

3. The moving picture re-encoding apparatus of claim 2, wherein the rate control information is any one piece or a plurality of pieces of information among an image size of a frame re-encoded by the encoding means, a code amount of the frame at the time of the encoding, an encoding bit rate in the encoding means, and an occupation amount of a virtual buffer assumed to be a video memory for decoding when the re-encoding is completed in the encoding means.

4. The moving picture re-encoding apparatus of any one of claims 1 to 3, further comprising an operation input means that accepts specification of a bit stream to be re-encoded and operation including a moving picture re-encoding instruction, wherein the encoding means performs the encoding with an encoding bit rate based on the operation input through the operation input means.

5. The moving picture re-encoding apparatus of claim 4, further comprising a minimum value calculating means that preliminarily predicts a minimum value of the frame interval based on information related to the operation input through the operation input means, wherein the decoding means continues the decoding up to time indicated by the minimum value of the frame interval calculated by the minimum value calculating means before the notification of the frame interval from the interval notifying means.

6. The moving picture re-encoding apparatus of any one of claims 1 to 5, wherein the encoding means includes a means that performs intra-frame encoding and a means that performs inter-frame encoding for a frame to be re-encoded.

7. A moving picture editing apparatus including the moving picture re-encoding apparatus of any one of claims 1 to 6, comprising: an edit accepting means that accepts an instruction for editing the bit stream from a user; and an editing means that edits a moving picture based on the instruction accepted by the edit accepting means, wherein the moving picture re-encoding apparatus re-encodes the edited moving picture in conjunction with the edit of the moving picture by the editing means.

8. A program incorporated into a moving picture re-encoding apparatus comprising a decoding means that decodes frames of a moving picture from a bit stream acquired by encoding the moving picture and an encoding means that re-encodes the frame decoded by the decoding means, the program allowing a controlling portion of the moving picture re-encoding apparatus to perform steps including: a frame selecting step of selecting a frame to be re-encoded from the frames decoded by the decoding means; an encode instructing step of allowing the encoding means to encode only the frame selected in the frame selecting step; an interval notifying step of calculating a frame interval, after the re-encoding of a frame by the encoding means, between the frame and a next frame to be re-encoded to notify the decoding means of the calculated frame interval; and a decode instructing step of instructing the decoding means to decode the bit stream for time based on the notified frame interval after the notification from the interval notifying step, wherein the flame selecting step includes a step of selecting a last frame as the next to be re-encoded among the frames until the time passes.

9. The program of claim 8, wherein the interval notifying step includes a step of calculating the frame interval based on rate control information when the encoding means re-encodes a frame.

10. The program of claim 9, wherein the rate control information is any one piece or a plurality of pieces of information among an image size of a frame re-encoded by the encoding means, a code amount of the frame at the time of the re-encoding, an encoding bit rate in the encoding means, and an occupation amount of a virtual buffer assumed to be a video memory for decoding when the re-encoding is completed in the encoding means.

11. The program of any one of claims 8 to 10, wherein the program allows the controlling portion to further perform an operation input step of accepting specification of a bit stream to be re-encoded and operation including a moving picture re-encoding instruction, and wherein the encode instructing step instructs the encoding means to perform the encoding with an encoding bit rate based on the operation input in the operation input step.

12. The program of claim 11, wherein the program allows the controlling portion to further perform a minimum value calculating step of preliminarily predicting a minimum value of the frame interval based on information related to the operation input in the operation input step, and wherein the decode instructing step instructs the decoding means to continue the decoding up to time indicated by the minimum value of the frame interval calculated in the minimum value calculating step before the notification of the frame interval in the interval notifying step.

13. The program of any one of claims 8 to 12, wherein the encoding means includes a means that performs intra-frame encoding and a means that performs inter-frame encoding for a frame to be re-encoded.

14. The program of any one of claims 8 to 13, wherein the program allows the controlling portion to further perform an edit accepting step of accepting an instruction for editing the bit stream from a user and an editing step of editing a moving picture based on the instruction accepted in the edit accepting step and allows the controlling portion to control the decoding means and the encoding means to re-encode the edited moving picture in conj unction with the edit of the moving picture in the editing step.

15. A program for allowing a computer to function as the apparatus of any one of claims 1 to 7.

16. A computer readable recording medium having recorded thereon the program of any one of claims 8 to 15.
